(19) Europäisches Patentamt
European Patent Office
Office européen des brevets

(11) **EP 2 527 755 A2**

(12) **EUROPEAN PATENT APPLICATION**

(43) Date of publication:
**28.11.2012 Bulletin 2012/48**

(51) Int Cl.:
***F24F 11/00*** *(2006.01)*

(21) Application number: **12168482.3**

(22) Date of filing: **18.05.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **25.05.2011 JP 2011116805**<br><br>(71) Applicant: **OMRON CORPORATION**<br>**Kyoto-shi, Kyoto 600-8530 (JP)**<br><br>(72) Inventors:<br> • **Takaichi, Ryuichiro**<br>  **Kyoto, Kyoto 600-8530 (JP)** | • **Yachiku, Hideki**<br>  **Kyoto, Kyoto 600-8530 (JP)**<br>• **Kawaratani, Seiichiro**<br>  **Kyoto, Kyoto 600-8530 (JP)**<br>• **Yoshida, Mitsumune**<br>  **Kyoto, Kyoto 600-8530 (JP)**<br>• **Miyaguchi, Shota**<br>  **Kyoto, Kyoto 600-8530 (JP)**<br>• **Hattori, Reiko**<br>  **Kyoto, Kyoto 600-8530 (JP)**<br><br>(74) Representative: **Horn Kleimann Waitzhofer**<br>**Elsenheimerstraße 65**<br>**DE-80687 München (DE)** |

(54) **Method for controlling air quality adjustment, method for controlling ventilation air flow and ventilation air flow controlling system**

(57) Provided are techniques regarding air quality adjustment and control that enable an amount of energy consumed in substantially closed environment such as manufacturing environment and air quality in the environment to be concurrently optimized. A control unit 30 associates a predetermined air flow of a fan filter unit (FFU) 22 with an operating state of a manufacturing apparatus 26 placed in a manufacturing environment. A current operating state of the manufacturing apparatus 26 is detected by a power sensor 12 and an air flow sensor 14. The control unit 30 switches ventilation air flow of the FFU 22 to the predetermined air flow preliminary associated with the detected operating state. The predetermined air flow is determined based on a relationship between the ventilation air flow for achieving target air cleanliness in the operating state of the manufacturing apparatus 26 and power consumption of the FFU 22 during the operation of the FFU with the ventilation air flow.

*FIG. 1*

**Description**

TECHNICAL FIELD

The present invention relates to a method for controlling air quality adjustment, a method for controlling ventilation air flow, and a ventilation air flow controlling system and, in particular, to techniques for adjusting quality of air in a substantially closed space such as manufacturing environment.

RELATED ART

In order to maintain quality of products with a trend toward high density or high definition, in many industries such as the electrical industry or the electronic industry, manufacturing environment having high-level air cleanliness compared with general environment is constructed. This manufacturing environment is generally referred to as a clean room or a clean booth.

Generally, in a clean room or a clean booth, a ventilation apparatus referred to as a fan filter unit (FFU) continuously operates under predetermined conditions such as air flow, the number of units, and an arrangement. The air cleanliness in manufacturing environment is thereby maintained. Hereinafter, "air cleanliness" is simply referred to as "cleanliness".

Japanese Unexamined Patent Publication No. 2009-174776 (hereinafter, referred to as JP 2009-174776 A) discloses a method for controlling ventilation air flow, in which floating particles are detected in real time, and ventilation of the particles are effectively performed. Specifically, when a measured value of a floating amount of particles becomes more than a target density, ventilation air flow within a target time is calculated. A blower and an air extractor are controlled based on the calculated air flow. When a measured value of a floating amount of particles becomes less than a target density, the ventilation air flow is decreased.

Japanese Unexamined Patent Publication No. 2010-255898 (hereinafter, referred to as JP 2010-255898 A) discloses a blowing control pattern forming apparatus for easily reducing costs and power consumption used by clean room equipment. This equipment includes means for measuring cleanliness of a clean room, means for measuring air flow of the clean room, means for calculating required air flow based on the measured cleanliness and air flow, and means for forming pattern data for blowing control based on the required air flow.

Japanese Unexamined Patent Publication No. 2005-98661 (hereinafter, referred to as JP 2005-98661 A) discloses an air flow controlling system, in which air flow of a plurality of air cleaners provided in a clean room is controlled so that appropriate laminar flow in the clean room is maintained, and running costs of the clean room are thereby reduced. This system has control means for controlling air flow of each air cleaner based on operating information regarding a manufacturing apparatus. The operating information of the manufacturing apparatus is at least one of information indicating a predetermined operating plan of the manufacturing apparatus and information indicating a current operating state of the manufacturing apparatus.

According to the method as disclosed in JP 2009-174776 A, when particle density detected by a sensor exceeds target density (threshold value), ventilation frequency is increased by increasing rotating speeds of a blower and an air extractor. However, according to this control, for example, in the case below, contamination of manufacturing environment may exceed an acceptable degree for a user of manufacturing apparatus.

When an increasing speed of dust (particles) is extremely fast, density of the dust may greatly exceed target density. In this case, even if ventilation frequency is increased, the dust density is not immediately decreased.

According to the characteristics of particle measurement, a measured value cannot be obtained before a lapse of certain delay time (e.g., one minute). A command for changing ventilation air flow is generated based on the measured value. Therefore, the generation of the command is actually delayed. In addition, while ventilation air flow is changed in response to the command, response time occurs before actual air flow reaches the air flow indicated by the command.

According to the method as disclosed in JP 2009-174776 A, each inverter frequency of a blower and an air extractor is changed, and ventilation air flow is thereby changed. Although the change may depend on manufacturing environment or settings, etc., the change in inverter frequency may cause discomfort to a user of manufacturing apparatus. For example, when operating noise of an inverter is changed with a change in inverter frequency, the change in operating noise may cause discomfort to a user. Alternatively, a change in air flow may cause discomfort to a user. These problems may prevent a real-time control of ventilation air flow from introducing it into manufacturing environment.

If inverter frequency is frequently changed, power consumption of inverter (in particular, power loss in the inverter) may be increased.

When a measured value is lower than target density, ventilation air flow is decreased to execute energy-saving operation. However, for example, due to a decrease in air extraction flow, an amount of particles entering into a clean room from the outside may be increased. If dust density is rapidly increased during energy-saving operation, contamination of manufacturing environment may easily exceed an acceptable degree for a user of manufacturing apparatus.

In the method of JP 2009-174776 A, ventilation air flow is controlled based on only one threshold value. However, it is hard to set the threshold value to an optimum value that allows energy consumption and cleanliness of manufacturing environment to be performed at the same time. If the threshold value is lowered, it is expected to keep high cleanliness of manufacturing environment. However, since large ventilation air flow is maintained in a long interval, an amount of energy consumed in the manufacturing environment is increased. In contrast, if the threshold value is heightened, it is expected to lower energy consumption. However, it is hard to keep high cleanliness of manufacturing environment.

JP 2010-255898 A discloses that air flow is controlled based on cleanliness of a clean room and current air flow. However, JP 2010-255898 A does not specifically disclose a relationship between air flow control and a current operating state of apparatus.

JP 2005-98661 A discloses that air flow is controlled based on an operating state of manufacturing apparatus (in operation or under suspension). However, a relationship between the operating state and energy consumed in environment is not specifically disclosed.

The present invention has been devised to solve the problems described above, and an object thereof is to provide techniques regarding air quality adjustment and control that enable an amount of energy consumed in substantially closed environment such as manufacturing environment and air quality in the environment to be concurrently optimized.

SUMMARY

In accordance with one aspect of the present invention, a method for controlling air quality adjustment includes: an associating step of obtaining amounts of energy consumed by an apparatus placed in a substantially closed environment and associating predetermined adjusting amounts of an air adjusting device for adjusting air quality in the substantially closed environment with operating states of the apparatus that are determined based on the obtained energy amounts; a detecting step of detecting a current operating state of the apparatus; and a switching step of switching the adjusting amount to the predetermined adjusting amount that is associated with the detected operating state. The predetermined adjusting amounts are determined based on a relationship between the adjusting amount for achieving target air quality in the operation state of the apparatus and power consumption of the air adjusting device during the operation of the air adjusting device with the adjusting amount.

In accordance with another aspect of the present invention, a method for controlling ventilation air flow includes: an associating step of obtaining amounts of energy consumed by a manufacturing apparatus placed in manufacturing environment; associating predetermined air flows of a ventilating device for ventilating the manufacturing environment with an operating state of the manufacturing apparatus that is determined based on the obtained energy amounts; a detecting step of detecting a current operating state of the manufacturing apparatus; and a switching step of switching ventilation air flow of the ventilating device to the predetermined air flow that is associated with the detected operating state. The predetermined air flow is determined based on a relationship between ventilation air flow for achieving target air cleanliness in an operating state of the manufacturing apparatus and power consumption of the ventilating device during the operation of the ventilating device with the ventilation air flow.

Preferably, the step of associating includes: calculating a candidate threshold value of energy amount for classifying operating states of the manufacturing apparatus based on a distribution of energy amounts in a unit interval; and associating the predetermined air flows with the operating state by using the candidate threshold value.

Preferably, the energy amount is an energy amount consumed in each of a plurality of manufacturing apparatuses.

Preferably, the energy amount is an energy amount consumed in the entire manufacturing environment.

Preferably, the manufacturing apparatus is controlled by a control device. The step of detecting a current operating state of the manufacturing apparatus includes identifying a current operating state of the manufacturing apparatus based on a controlling state of the control device.

Preferably, the method for controlling ventilation air flow further includes the steps of: measuring a particle amount in the manufacturing environment; displaying a decreasing rate of power consumption relative to maximum power consumption of the ventilating device in response to the step of switching ventilation air flow to the predetermined air flow, the measured particle amount, and time-series data of the particle amount; and changing ventilation air flow to air flow corresponding to a user request for ventilation air flow, if the request occurs.

Preferably, the method for controlling ventilation air flow further includes the steps of: measuring a particle amount in the manufacturing environment; and repeatedly associating predetermined air flow with an operating state of the manufacturing apparatus, when the measured particle amount deviates from a predetermined range.

Preferably, the method for controlling ventilation air flow further includes the steps of: measuring a particle amount in the manufacturing environment; detecting a sign of anomalousness in which the measured particle amount continuously rises multiple times within a predetermined range; and setting ventilation air flow to maximum air flow when the sign of anomalousness is detected.

Preferably, the method for controlling ventilation air flow further includes the steps of: measuring a particle amount in the manufacturing environment; detecting a sign of anomalousness in which the measured particle amount exceeds an upper limit of a predetermined range; and setting ventilation air flow to maximum air flow when the anomalousness is detected.

Preferably, in the step of associating, the predetermined air flow is determined by gradually decreasing ventilation air flow from maximum air flow.

Preferably, the manufacturing environment has an opening portion passing from an inside of the manufacturing environment to on outside of the manufacturing environment. The method for controlling ventilation air flow further includes the steps of: measuring a flow speed in the opening portion; and changing ventilation air flow according to the measured flow speed.

The predetermined adjusting amount may be an optimum adjusting amount. Moreover, the predetermined air flow may be an optimum air flow. The optimum adjusting amount and/or optimum air flow may be determined automatically or manually.

In accordance with still another aspect of the present invention, a ventilation air flow controlling system includes: a ventilating device configured to ventilate manufacturing environment in which a manufacturing apparatus is placed; a detecting device configured to detect a current amount of energy consumption of the manufacturing apparatus; and a control device configured to change air flow of the ventilating device. The control device includes: a calculating unit configured to determine a predetermined air flow of the ventilating device in relation to an amount of energy consumption of the manufacturing apparatus; a memory unit configured to store a relationship between the predetermined air flow of the ventilating device and the amount of energy consumption of the manufacturing apparatus; and a switching unit configured to switch air flow of the ventilating device to the predetermined air flow based on the current amount of energy consumption of the manufacturing apparatus detected by the detecting device and the relationship stored in the memory unit. The calculating unit determines the predetermined air flow based on a relationship between the ventilation air flow achieving target air cleanliness while the manufacturing apparatus consumes the amount of energy consumption and power consumption of the ventilating device during the operation of the ventilating device with the ventilation air flow.

According to the present invention, an amount of energy consumed in substantially closed environment such as manufacturing environment and air quality in the environment can be concurrently optimized.

BRIEF DESCRIPTION OF THE DRAWINGS

Fig. 1 is a schematic diagram illustrating manufacturing environment to which a method for controlling ventilation air flow according to an embodiment of the present invention is applied;
Fig. 2 illustrates a control flow of ventilation air flow executed by a ventilation air flow controlling system according to an embodiment of the present invention;
Fig. 3 illustrates a first example of a threshold value setting regarding an amount of power consumption of a manufacturing apparatus;
Fig. 4 illustrates a second example of a threshold value setting regarding an amount of power consumption of a manufacturing apparatus;
Fig. 5 illustrates an example in which there are two candidate threshold values of air consumption amount of a manufacturing apparatus;
Fig. 6 illustrates an example in which there are three candidate threshold values of air consumption amount of a manufacturing apparatus;
Fig. 7 illustrates an example of a plurality of operating patterns of a manufacturing apparatus;
Fig. 8 illustrates transition of particle amount corresponding to a sign of anomalousness and emergency condition;
Fig. 9 is a flow chart illustrating a process in a self teaching mode;
Fig. 10 illustrates an example of measurement data obtained by the process loop of steps S11 to S13 shown in Fig. 9;
Fig. 11 illustrates control data after teaching;
Fig. 12 illustrates information displayed in a screen of a display;
Fig. 13 illustrates a first modified embodiment of ventilation air flow controlling system according to an embodiment of the present invention; and
Fig. 14 illustrates a second modified embodiment of ventilation air flow controlling system according to an embodiment of the present invention.

DETAILED DESCRIPTION

Hereinafter, preferred embodiments of the present invention will be described in detail with reference to the drawings. The same reference numbers are applied to the same or corresponding parts, and the descriptions thereof are not repeated.

Hereinafter, a method for controlling ventilation air flow in manufacturing environment, as an embodiment of a method for controlling air quality adjustment according to the present invention. In this embodiment, air cleanliness is used as air quality in manufacturing environment. The method for controlling ventilation air flow may be applied to a place in which cleanliness is required. In the embodiment below, as an example, a clean booth of class 10,000 is described. "Class 10,000" means that the allowable number of particles having a diameter range of 0.5 $\mu$m to 5 $\mu$m is 10,000 per one cubic foot (1 cf) is 10,000.

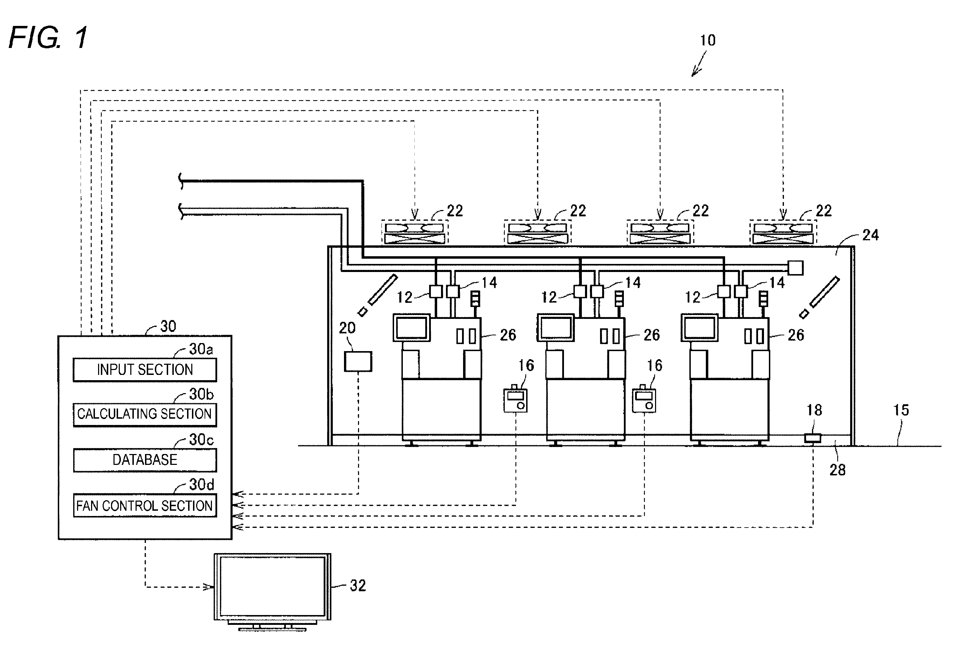

Fig. 1 is a schematic diagram illustrating manufacturing environment to which the method for controlling ventilation air flow according to the embodiment of the present invention is applied. Referring to Fig. 1, a ventilation air flow controlling system 10 mainly includes a power sensor 12, an air flow sensor 14, a particle sensor 16, a flow speed and direction sensor 18, a fan filter unit (FFU) 22, a control unit 30, and a display 32.

The power sensor 12 and the air flow sensor 14 are provided to each manufacturing apparatus 26. The power sensor 12 measures a power consumption amount of the manufacturing apparatus 26 to transmit the measured value to the control unit 30. The air flow sensor 14 measures a flow rate of compressed air provided to the manufacturing apparatus 26 through a pipe. The measured value is transmitted to the control unit 30.

The particle sensor 16 measures the number of dust (particles) in a manufacturing room 24 to transmit the measured value to the control unit 30. The number of particle sensors 16 corresponds to the square root of floor space (square meter) of the manufacturing room 24. The particle sensor 16 has a tube for sucking air. It is desired that an opening of the tube is placed in the neighborhood of a path line of products. Preferably, an additional particle sensor 16 is arranged on a position lower than the path line and close to a floor 15. An increment of the number of particles in the path line can be thereby estimated.

The flow speed and direction sensor 18 is arranged in an opening portion 28 of the manufacturing room 24. A transparent sheet (curtain) is provided in a front of the manufacturing room 24. A lower end of the sheet is arranged away from the floor 15 by a predetermined height. A portion between the lower end of the transparent sheet and the floor 15 is the opening portion 28. The flow speed and direction sensor 18 measures a flow speed and a flow direction of flow of air flowing from an inside of the manufacturing room 24 to an outside thereof. The measured flow speed and direction are transmitted to the control unit 30.

The control unit 30 calculates the number of times of ventilation in the manufacturing room 24 based on the measured flow speed by the flow speed and direction sensor 18. The number of times of ventilation in the manufacturing room 24 is the number of air changes per one hour in the manufacturing room 24, and is calculated based on the following equation.

$$\text{The number of times of ventilation (times/h)} = (\text{flow speed (m/s)} \times \text{total opening space (m}^2) \times 3600)/\text{manufacturing room volume (m}^3)$$

The FFU 22 has a blower to provide clean air to the manufacturing room 24 via a HEPA filter. By the plurality of FFUs 22, clean air is introduced from the entire roof of the manufacturing room 24 into the manufacturing room 24, and air in the manufacturing room 24 flows out through the opening portion 28. This ventilation prevents particles from entering into the manufacturing room 24 from an outside of the manufacturing room 24.

The FFU 22 is connected to the control unit 30. According to a command from the control unit 30, a start and a stop of the blower of the FFU 22 and a rotation speed of the blower (fan) are controlled.

The ventilation air flow controlling system 10 may have a fine pressure difference sensor 20 in addition to or instead of the flow speed and direction sensor 18. The fine pressure difference sensor 20 measures a difference between an inside air pressure and an outside air pressure of the manufacturing room 24, to transmit the measured value (value of pressure difference) to the control unit 30.

The control unit 30 controls the plurality of FFUs 22 based on the measured values of the power sensor 12, the air flow sensor 14, the particle sensor 16, and the flow speed and direction sensor 18 (and the fine pressure difference sensor 20). Specifically, the control unit 30 varies ventilation air flow of the FFU 22.

The control unit 30 includes an input section 30a, a calculating section 30b, a database 30c and a fan control section 30d. The input section 30a receives the measured values of the above-mentioned various sensors. The calculating section 30b executes predetermined calculation based on the measured values received by the input section 30a, to identify states of the plurality of manufacturing apparatus 26. The database 30c stores apparatus operation patterns identified based on the calculation results of the calculating section 30b and measurement results of the number of particles relative to each driving pattern of the FFU 20, etc. The fan control section 30d controls the FFU 22 based on the information stored in the database 30c, the information received by the input section 30a (the measured values of the sensors) and the calculation results of the calculating section 30b, etc.

The control unit 30 may be implemented by a personal computer or a special controller. If a device implementing the control unit 30 has the above-mentioned functions, a hardware configuration thereof is not limited.

The control unit 30 obtains a state of the manufacturing apparatus 26 based on measured values by the power sensor 12 and the air flow sensor 14. An operating state of each manufacturing apparatus 26 can be obtained by providing the power sensor 12 and the air flow sensor 14 for each manufacturing apparatus 26. Therefore, ventilation air flow can be controlled in more detail.

The display 32 indicates the various information stored in the control unit 30 and the calculation results of the control unit 30, etc., to a user. Any kind of display may be applied as the display.

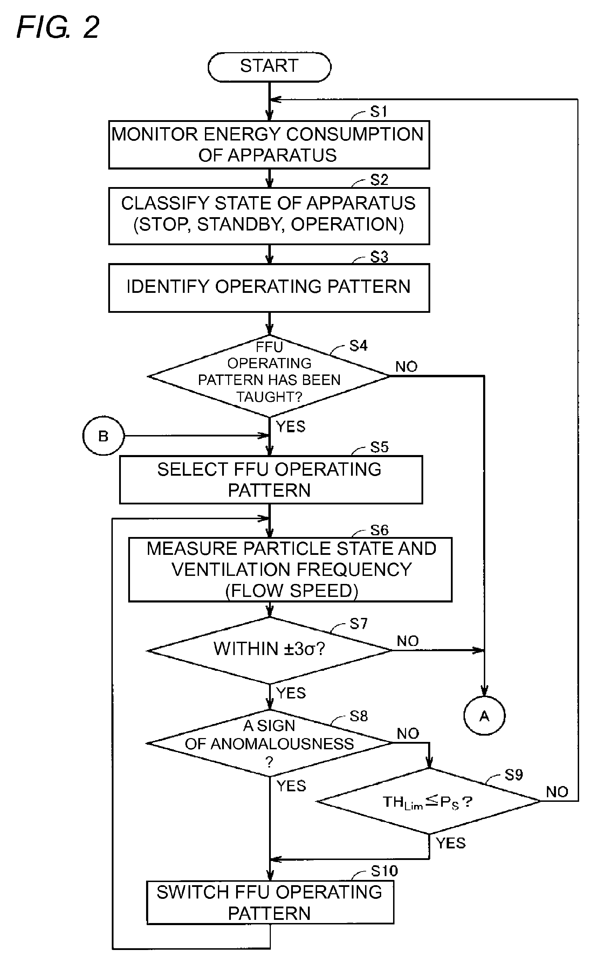

Fig. 2 illustrates a control flow of ventilation air flow executed by the ventilation air flow controlling system according to the embodiment of the present invention. Referring to Fig. 2, first, energy consumption of the manufacturing apparatus 26 is monitored (step S1). Specifically, power consumption and air flow consumption of the manufacturing apparatus 26 in operation are measured by the power sensor 12 and the air flow sensor 14, respectively. The power consumption and the air flow consumption of the manufacturing apparatus 26 corresponding to each of a plurality of manufacturing patterns are measured. For example, if measurement of energy consumption is performed for a few days, power consumption and air flow consumption of the manufacturing apparatus 26 corresponding to each of manufacturing patterns can be obtained. The measured values of the power sensor 12 and the air flow sensor 14 are transmitted to the control unit 30, and the control unit 30 stores data of the measured values therein.

The control unit 30 classifies a plurality of operating patterns (operating states) of the manufacturing apparatus 26 into an operating state, a standby state, and a stopped state based on the data obtained in step S1 (step S2). The classification is performed based on a threshold value of energy amount input to the control unit 30 by a user. A process of step S2 is described in detail, below.

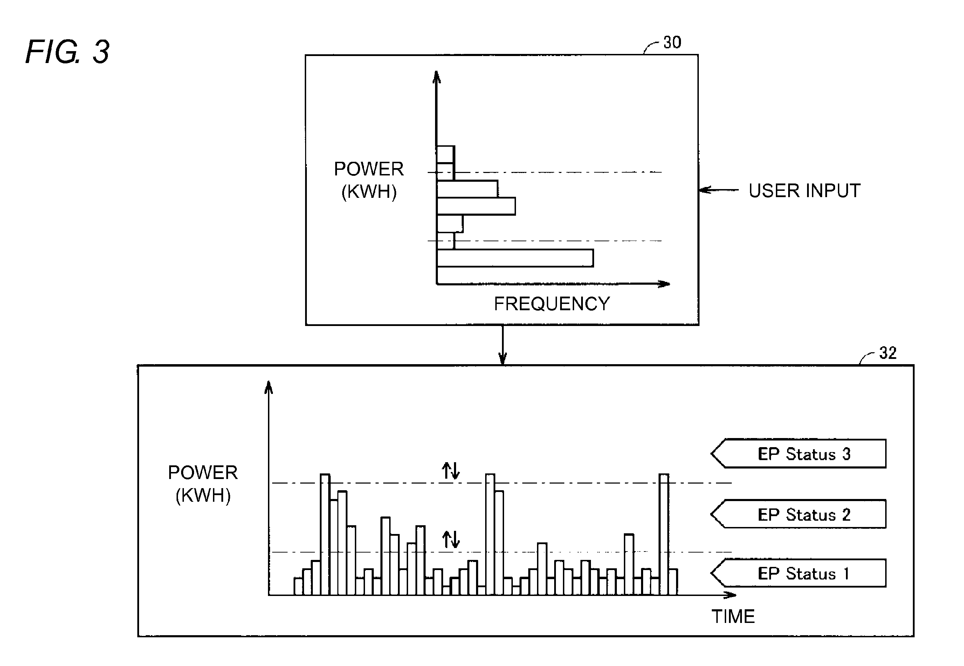

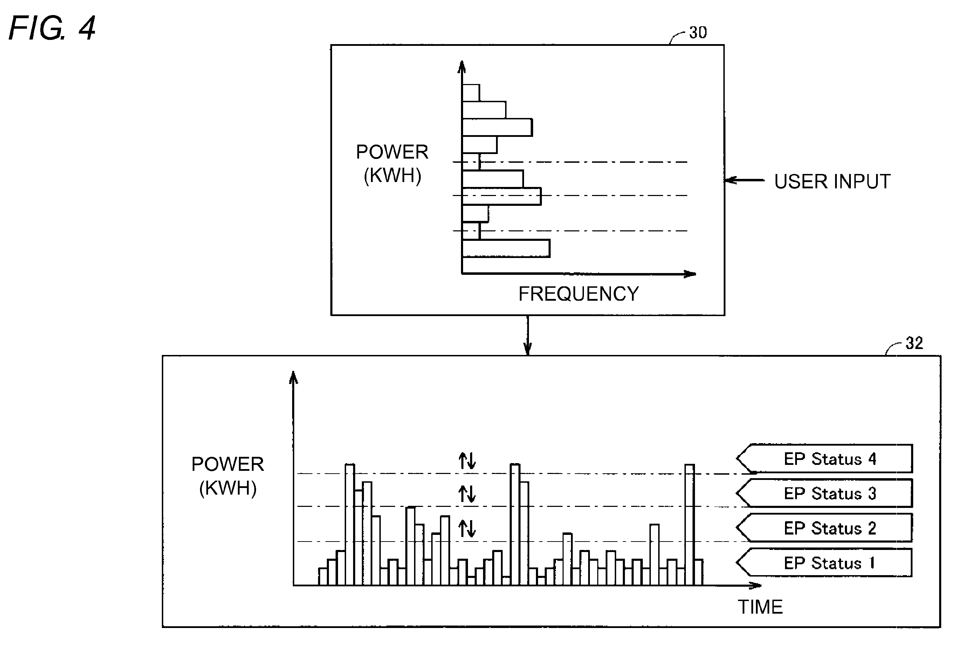

Fig. 3 illustrates a first example of a threshold value setting regarding an amount of power consumption of the manufacturing apparatus. Fig. 4 illustrates a second example of a threshold value setting regarding an amount of power consumption of the manufacturing apparatus. Referring to Figs. 3 and 4, the control unit 30 creates frequency distribution of an amount of power consumption regarding one of the manufacturing apparatuses based on the data of power consumption amount stored therein. The control unit 30 determines a candidate threshold value of power consumption amount based on the frequency distribution. For example, as shown in Figs. 3 and 4, the candidate threshold value is selected as a value of power consumption amount corresponding to a valley portion of the frequency distribution. Fig. 3 shows an example in which two candidate threshold values are determined, and Fig. 4 shows an example in which three candidate threshold values are determined.

Further, the control unit 30 displays a graph indicating the measured values of power consumption amount (time-series data) per a constant time and the candidate threshold values overlapped therewith, on a screen of the display 32. In the example shown in Fig. 3, the two candidate threshold values indicated by two straight lines are displayed on the screen of the display 32. A user compares the candidate threshold values and the time-series data of the real data displayed on the screen of the display 32, to input a threshold value for identifying a state of the manufacturing apparatus. The control unit 30 receives the input threshold value, and varies the candidate threshold values displayed on the screen of the display 32. For example, the straight lines for indicating the candidate threshold values move up and down in response to the user's input. By the two candidate threshold values, the state of manufacturing apparatus is classified into a first state (EP Status 1) in which the power consumption has a relatively small value, a second state (EP Status 2) in which the power consumption has an intermediate value, and a third state (EP Status 3) in which the power consumption has a relatively large value. When there are three candidate threshold values, four states (EP Status 1 to EP Status 4) according to the power consumption amount are determined.

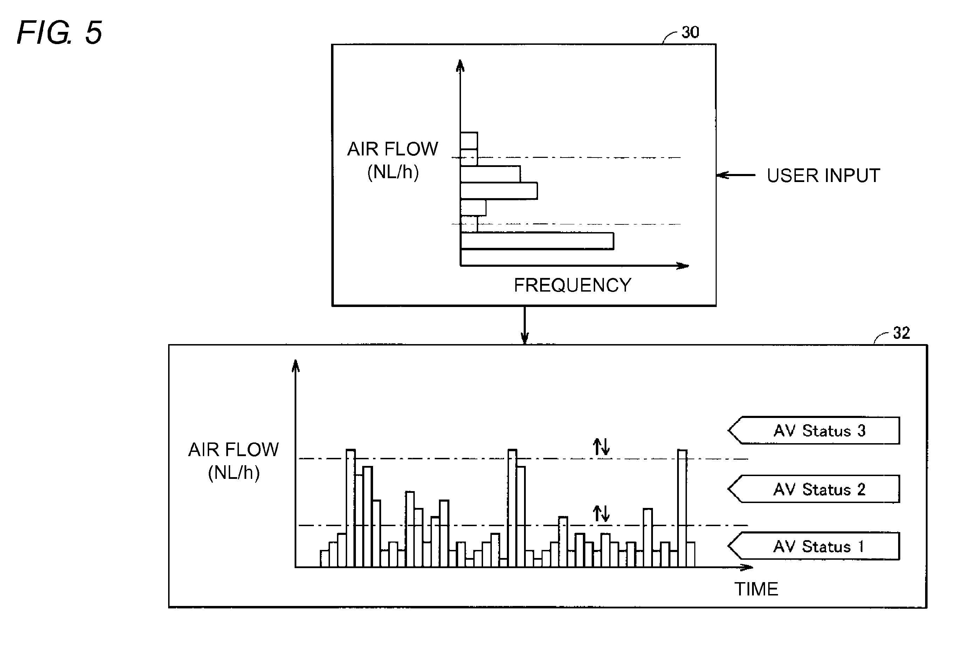

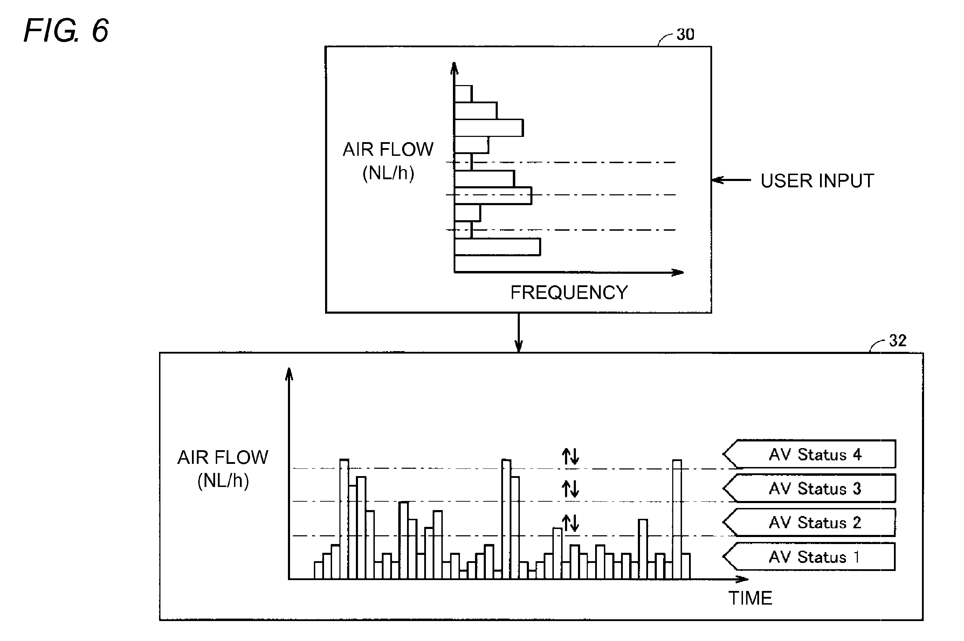

The control unit 30, according to the same system, creates frequency distribution of air consumption amount, and determines a candidate threshold value of air consumption amount based on the frequency distribution. Fig. 5 illustrates an example in which there are two candidate threshold values of air consumption amount of the manufacturing apparatus. Fig. 6 illustrates an example in which there are three candidate threshold values of air consumption amount of the manufacturing apparatus. As shown in Figs. 5 and 6, a graph indicating the measured values of air consumption amount per a constant time and the candidate threshold values overlapped therewith are displayed on the screen of the display 32. A user compares the candidate threshold values and the real data displayed on the screen of the display 32, to input a threshold value for identifying a state of the manufacturing apparatus. The control unit 30 receives the input threshold value, and varies the candidate threshold values displayed on the screen of the display 32. By the two threshold values, the state of manufacturing apparatus is classified into a first state (AV Status 1) in which the air consumption amount has a relatively small value, a second state (AV Status 2) in which the air consumption amount has an intermediate value, and a third state (AV Status 3) in which the air consumption amount has a relatively large value. When there are four candidate threshold values, four states (AV Status 1 to AV Status 4) according to the air consumption amount are determined.

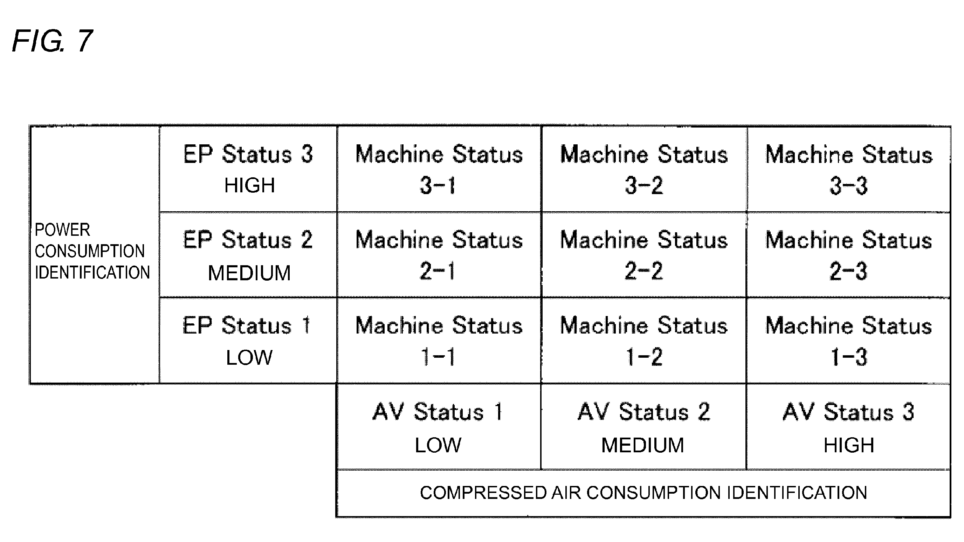

The control unit 30 creates a plurality of operating patterns of the manufacturing apparatus 26 according to combinations of the plurality of states determined based on the threshold value of power consumption amount and the plurality of states determined based on the threshold value of air consumption amount. Fig. 7 illustrates an example of a plurality of operating patterns of the manufacturing apparatus. Referring to Fig. 7, when there are two threshold values of power consumption amount and two threshold values of air consumption amount, nine operating patterns (Machine Status 1-1 to 3-3) are created according to combinations of three states based on the power consumption amount and three states based on the air consumption amount.

Returning to Fig. 2, the control unit 30 obtains a measured value of power consumption amount of the manufacturing apparatus 26 from the power sensor 12 and a measured value of air consumption amount of the manufacturing apparatus 26 from the air flow sensor 14 in real time (for example, at one minute interval). Based on these measured values, the control unit 30 identifies the pattern corresponding to a current state of the manufacturing apparatus 26 from the plurality of operating patterns shown in Fig. 7 (step S3).

The control unit 30 determines that an FFU operating pattern corresponding to the identified operating pattern has been taught (step S4). When the FFU operating pattern associated with the operating pattern is preliminary registered in the database 30c, the control unit 30 determines that the FFU operating pattern has been taught. In this case (YES in step S4), the process proceeds to step S5. In contrast, when the FFU operating pattern associated with the operating pattern is not registered in the database 30c, it is determined that the FFU operating pattern is not taught (NO in step S4), the process proceeds to step S11 as mentioned below. In this case, a teaching mode process is executed.

Here, the case in which the FFU operating pattern has been taught is described. In step S5, the control unit 30 refers to the database 30c and selects the FFU operating pattern corresponding to the identified operating pattern. The identification of operating pattern and the selection of FFU operating pattern are performed at a predetermined interval. This interval, for example, is thirty minutes, but the interval is not constrained to this time. By selecting the FFU operating pattern, ventilation air flow of the FFU 22 is switched to a suitable air flow preliminary associated with the FFU operating pattern.

In step S6, the control unit 30 obtains a measured value of particle amount from the particle sensor 16 and a measured value of flow speed from the flow speed and direction sensor 18. The particle amount, for example, is measured by a moving average per fifteen seconds. Therefore, in the period before changing the FFU operating pattern (that is, in thirty minutes), 120 time-series data indicating the amount of floating particles is obtained. The measured data of particle amount and the measured data of flow speed are associated with each other. Therefore, a particle state in the manufacturing room 24 and the number of times of ventilation (flow speed) in the particle state are measured.

In step S7, the control unit 30 executes statistical processing according to a normal distribution with the time-series data of particle amount (the number of data is 120). The control unit 30 thereby calculates an average of particle amount (Ave) and a value of the average + 3σ (Ave + 3σ). The control unit 30 determines whether the moving average of particle amount in one minute is within the specific range, i.e., the taught average $\pm 3\sigma$ (especially, under Ave + 3σ).

If the measured value of particle amount is within the specific range (YES in step S7), the process proceeds to step S8. In contrast, if the measured value of particle amount is not within the specific range (NO in step S8), a process in the self teaching mode is performed as mentioned below. Specifically, the case in which the measured value is not within the specific range corresponds to the case in which the measured value of particle amount exceeds (Ave + 3σ).

The control unit 30 calculates an energy saving rate (or reduced power value). The energy saving rate is calculated based on the ratio of a power consumption amount of the FFU 22 with maximum ventilation air flow and a power consumption amount of the FFU 22 with current ventilation air flow. The difference between them may be calculated as the reduced power value. The control unit 30 indicates the 120 time-series data of particle amount, the energy saving rate (or reduced power value) and a management value of cleanliness class of the manufacturing room 24 (clean booth) in addition to the average of particle amount (Ave) and the (Ave + aσ value), on the monitor of the display 32.

A user can determine the ventilation air flow based on the above-mentioned information displayed on the screen of the display 32. When the user's instruction is input to the control unit 30, the control unit 30 switches ventilation air flow of the FFU 22 according to the user's instruction. The ventilation air flow is thereby switched according to the state of the apparatus.

In step S8, the control unit 30 determines whether a sign of anomalousness in the manufacturing environment is detected. Specifically, if the control unit 30 detects that the moving average of particle amount in one minute continuously rises three times in a row under the (Ave + 3σ value) at the teaching time, the control unit 30 estimates a sign of sudden rise regarding the particle amount. In this case (YES in step S8), the control unit 30 switches the operating pattern of the FFU 22 (step S10). Specifically, in step S10, the control unit 30 switches the ventilation air flow of the FFU from the suitable air flow set by step S5 to maximum air flow.

In contrast, if a sign of anomalousness in the manufacturing environment is not detected (NO in step S8), the process proceeds to step S9. The case in which "a sign of anomalousness in the manufacturing environment is not detected" corresponds to the case in which the condition that "the moving average of particle amount in one minute continuously rises three times in a row under the taught average value + 3σ" is not satisfied. In step S9, the control unit 30 determines whether the condition $TH_{Lim} \leq P_S$ between the upper-limit threshold value of particle amount $TH_{Lim}$ and the moving average of particle amount in one minute $P_S$ is satisfied. The upper-limit threshold value $TH_{Lim}$ is the above-mentioned (Ave + 3σ value).

For example, if a particle amount rapidly rises due to bringing a dust source into the manufacturing environment from the outside, etc., the particle amount may exceed (Ave + 3σ value) without any sign. In this case, anomalousness can not be detected by the processing of step S8. Therefore, the control unit 30 estimates this condition as an emergency condition, and switches the operating pattern of the FFU 22 (step S10). Specifically, if the condition $TH_{Lim} \leq P_S$ is satisfied (YES in step S9), the control unit 30 switches the ventilation air flow of the FFU 22 from the suitable air flow set by step S5 to maximum air flow (step S10).

In contrast, if the condition $TH_{Lim} > P_S$ is satisfied (NO in step S9), the process is returned to step S1. In this case, the sign of anomalousness is not detected (NO in step S8) and the moving average of particle amount in one minute $P_S$ does not exceed the upper-limit threshold value $TH_{Lim}$ (= + 3σ value). Therefore, a normal ventilation air flow control is executed.

After the FFU operating pattern is switched in step S10, the process is returned to step S6. If the moving average of particle amount in one minute continuously drops three times in a row under (Ave + 3σ), the control unit 30 restores the ventilation air flow of the FFU 22 from the maximum air flow to the suitable air flow preliminary associated with the operating pattern of the manufacturing apparatus 26.

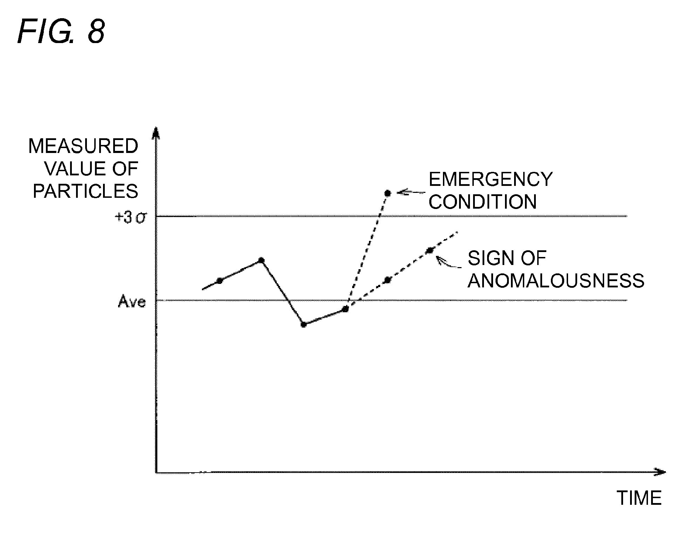

Fig. 8 illustrates transition of particle amount corresponding to the sign of anomalousness and the emergency condition. In Fig. 8, although the measured value of particles (moving average in one minute) is lower than the average value (Ave) + 3σ, if the measured value continuously rises three times in a row, the control unit 30 determines that this transition of the measured value of particles is a sign of anomalousness. On the other hand, although the measured value of particles does not rise three times in a row, if the measured value exceeds (Ave + 3σ value), the control unit 30 determines that this transition of the measured value of particles is an emergency condition.

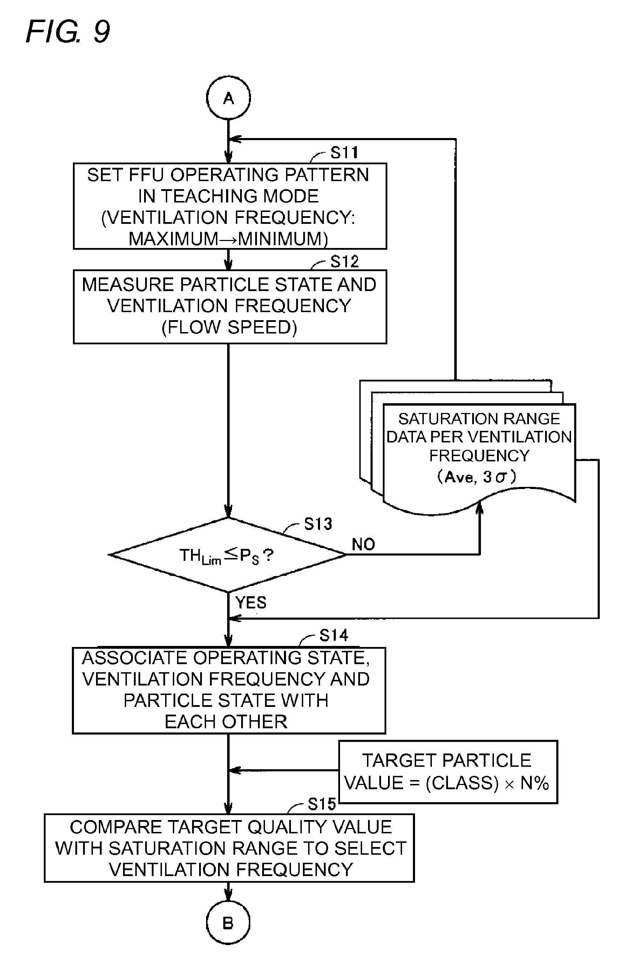

Fig. 9 is a flow chart illustrating the process in the self teaching mode. This process in the flow chart is executed, if the determined results by step S4 or S7 (see Fig. 2) in the processing flow shown in Fig. 2 are negative (NO). Referring to Fig. 9, in step S11, an FFU operating pattern in the teaching mode is set. Specifically, a plurality of operating patterns are set in order to gradually reduce a ventilation frequency from the maximum ventilation frequency to the minimum ventilation frequency.

In step S12, the control unit 30 obtains a measured value of particle amount from the particle sensor 16 and a measured value of flow speed from the flow speed and direction sensor 18. In step S13, the control unit 30 determines whether the condition $TH_{Lim} \leq P_S$ between the upper-limit threshold value $TH_{Lim}$ and the moving average of particle amount in one minute $P_S$ is satisfied. If $TH_{Lim} > P_S$ is satisfied (NO in step S13), the process is returned to step S11. The operating pattern of the FFU 22 is thereby switched so that the ventilation frequency of the FFU 22 is reduced. By repeating the loop between steps S11 to S13, the ventilation frequency of the FFU 22 is gradually reduced, and $TH_{Lim} \leq P_S$ is achieved at the specific ventilation frequency. In this case, the process exits from the loop between steps S11 to S13. By the above-mentioned process loop, the saturation range data (average of particle amount and + 3σ value) for each ventilation frequency is obtained.

If $TH_{Lim} \leq P_S$ is satisfied (YES in step S13), the process proceeds to step S14. In step S14, the control unit 30 associates the ventilation frequency and the particle state (particle amount) with the operating state of the apparatus. Therefore, the data indicating the change situation of particle state in response to the change in the ventilation frequency under the specific operating state can be obtained.

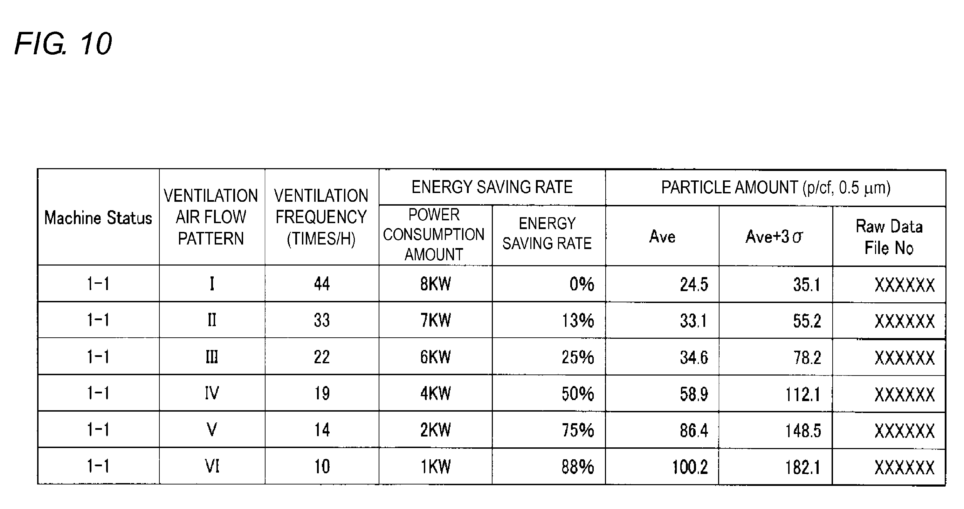

Fig. 10 illustrates an example of the measurement data obtained by the process loop of steps S11 to S13 shown in Fig. 9. The following values are presented for the purpose of easily understanding the embodiments of the present invention. The following values are not intended to limit the present invention.

Referring to Fig. 10, in the operating state corresponding to "Machine Status 1-1 ", the operating pattern of the FFU 22 ("ventilation air flow pattern") is switched. First, the ventilation air flow pattern I capable of obtaining a maximum ventilation frequency is set. The control unit 30 (calculating section 30b) calculates a maximum ventilation frequency based on a measured value of flow speed from the flow speed and direction sensor 18. In this case, the ventilation frequency is 44 (times/H). The power consumption amount of the FFU 22 corresponding to the ventilation air flow is stored in the database. If it is the maximum ventilation frequency, the power consumption amount of the FFU 22 becomes maximum. An energy saving rate is calculated as the ratio of a maximum power consumption amount and an amount of reduced power consumption of the FFU 22. A particle amount in the maximum ventilation frequency is measured, and the average (Ave) and (Ave + 3σ) value are calculated. These values are stored in the database 30c.

Next, the pattern II in which the ventilation frequency is reduced by one step from the maximum ventilation frequency is set. By the similar method as mentioned above, the ventilation frequency and the power consumption amount of the FFU 22 are stored in the database 30c. A particle amount in this ventilation frequency is measured, and the average and 3σ value are calculated. These values are stored in the database 30c.

In the same manner, the operation patterns III to VI of the FFU 22 are set. The pattern VI is an operation pattern of the FFU 22 in order to obtain a minimum ventilation frequency. Therefore, the maximum energy saving rate can be achieved, and the average and 3σ value of particle amount are increased.

If a management value of cleanliness class is 10000, it can be determined that the average (Ave) and the value (Ave + 3σ) of particle amount have sufficiently low levels relative to the management value when the FFU 22 is operated according to the pattern VI.

The process in self teaching mode may be executed during the operation of manufacturing apparatus, that is, the manufacturing of products. It is necessary to prevent the cleanliness of manufacturing environment from deteriorating (increase of particle amount) due to the process (self teaching). In view of this point, in the self teaching mode, the ventilation frequency is initially set to the maximum ventilation frequency, and then, the ventilation frequency is gradually reduced from the maximum ventilation frequency. Accordingly, the cleanliness of manufacturing environment is hardly reduced by executing the self teaching mode.

Returning to Fig. 9, in step S15, the control unit 30 compares the target quality value with the saturation range to determine the ventilation frequency. The target quality value is a target value of the number of particles. The target quality value is determined based on (class) x N%. For example, in the case of "class 10000", the target value of the number of particles is determined based on 10000 x N%. The value of N% may be set by a user. Therefore, the suitable target particle value can be set in each manufacturing environment. By the process of step S15, the operating state of the manufacturing apparatus 26 is associated with the suitable air flow of the FFU 22 (suitable ventilation frequency). When the ventilation frequency is selected by the process of step S15, the process of the self teaching mode is terminated. In this case, the process proceeds to step S5 in Fig. 2.

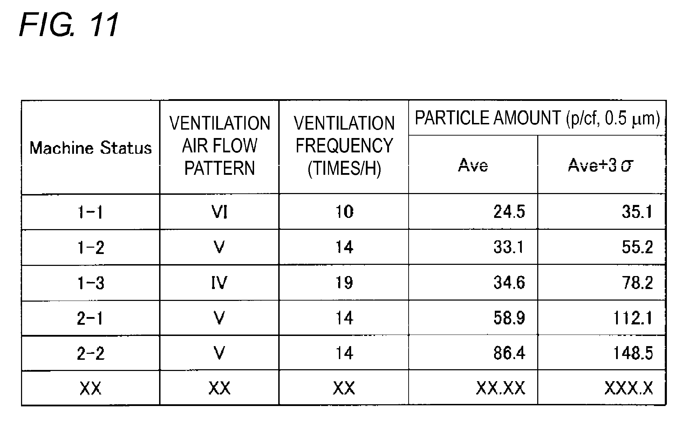

Fig. 11 illustrates control data after teaching. Referring to Fig. 11, the ventilation air flow pattern of the FFU 22 by which the suitable air flow is obtained is set for each Machine Status. In addition, the ventilation frequency and the particle amount (Ave, Ave + 3σ) each corresponding to the ventilation air flow pattern are registered in the database.

As mentioned above, in the embodiment of the present invention, the FFU operating pattern is set according to the operating state of manufacturing apparatus in the target manufacturing environment (clean booth or clean room). The FFU operating pattern is preliminary taught and is a pattern in which the operating state of apparatus, the ventilation frequency and the particle state are associated with each other. The pattern is selected from the plurality of candidate patterns based on the target particle value and the saturation range (average and 3σ value of particle amount). Therefore, the ventilation frequency (suitable air flow) capable of maintaining the target particle value according to the operating state of apparatus can be set. In addition, if the ventilation air flow is lower than the maximum air flow, the power consumption can be reduced. Accordingly, the operating pattern capable of obtaining the suitable air flow may be an operating pattern capable of reducing the power consumption of the FFU 22. According to the embodiment of the present invention, an amount of energy consumed in manufacturing environment and cleanliness in the manufacturing environment can be concurrently optimized.

A particle amount depends on an operating state of manufacturing apparatus. That is, when the manufacturing apparatus is in operation, the apparatus easily raises dust, and hence, the particle amount is increased. In this case, the FFU operating pattern that allows the ventilation frequency to be increased is selected. In contrast, when the manufacturing apparatus is in a standby state or stopped state, the particle amount is stably maintained in a low state. Therefore, even if the ventilation frequency is decreased, a major change in the state does not occur. Accordingly, the FFU operating pattern that allows the ventilation frequency to be decreased is selected.

According to the embodiment of the present invention, the ventilation frequency (air flow pattern) is dynamically controlled in response to the state of apparatus. Because delay of control in response to the target management value of particle can be reduced, the particle amount can be stably controlled and an energy saving operation can be achieved.

Because the particle fluctuation range measured and taught in each state of apparatus is indicated to a user, reliability of quality can be increased, even if the energy saving operation is performed.

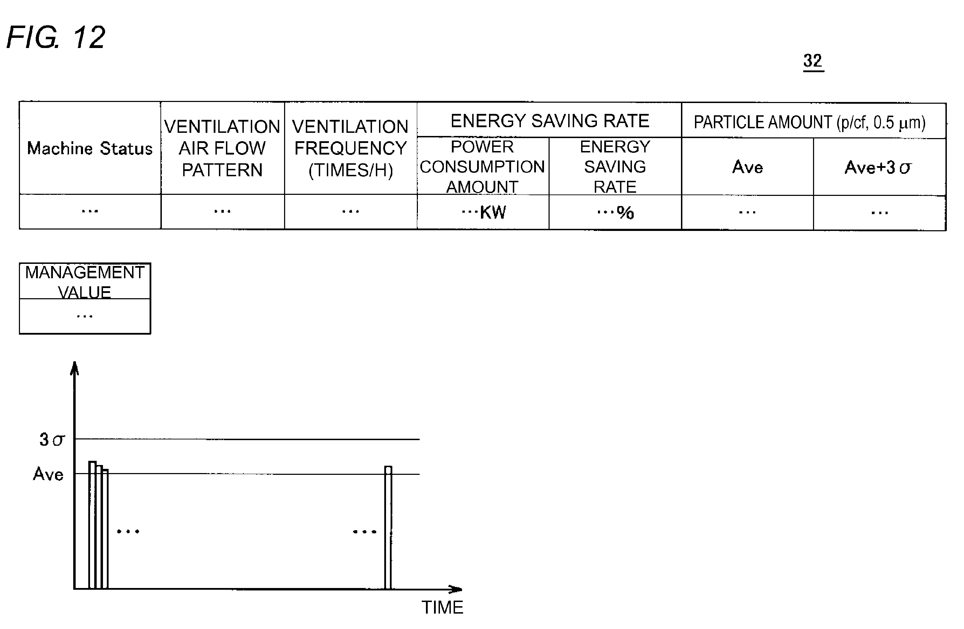

Fig. 12 illustrates information displayed in the screen of the display. Referring to Fig. 12, the operating state (Machine Status) of the specific manufacturing apparatus, the ventilation air flow pattern, the ventilation frequency, the power consumption amount, the energy saving rate, the particle amount (Ave, Ave + 3σ), and the management value of particle amount are indicated on the screen of the display 32. In addition, the time-series data of the measured value of particles (moving average in one minute) is indicated on the screen of the display 32. According to them, a user can monitor transition of particle amount and vary the ventilation air flow. Because the cleanliness of manufacturing environment can be stably maintained, reliability of manufacturing quality can be increased.

According to the present invention, a flow speed and a flow direction in the opening portion are measured in real time by the sensor during the energy saving operation (low ventilation frequency). Accordingly, dust entering from the outside into the manufacturing environment can be monitored and controlled. In the low ventilation frequency, it is considered that an air pressure difference between the inside and the outside of the manufacturing environment is low. This slight air pressure difference may not be sufficiently detected by a fine pressure difference sensor. By using the flow speed and direction sensor, a flow speed in the opening portion can be detected with high accuracy in the operation of low ventilation frequency, and hence, dust entering from the outside into the manufacturing environment can be monitored and controlled.

According to the embodiment of the present invention, the control unit has the self teaching mode. By using the self teaching mode, for example, if density of dust in a clean booth (or clean room) is reduced by an improvement activity of the spot, a ventilation frequency can be reset according to the environment. Therefore, an energy saving rate of FFU can be improved. On the other hand, if the density of dust is increased due to malfunction of FFU, a ventilation frequency can be reset by repeatedly teaching, and hence, a bad influence on the quality of products can be prevented.

The control unit 30 may indicate a revision history of ventilation air flow setting to a user on the screen of the display 32. The user thereby recognizes a trend of variation of the spot environment in relative longtime span. The recognized trend may be used for an estimate of failure factor or a preventive maintenance.

According to the present invention, time-series observation of particle actions is performed within the measured and taught fluctuation range, and hence, a sudden increase of particle amount can be estimated. If a sign of anomalousness is detected, the FFU operating pattern is switched in order to obtain the maximum ventilation frequency. Since the FFU operating pattern is switched so that a particle amount is reduced in the stage of sign of anomalousness, the state in which a particle amount exceeds the management value hardly occurs.

(Modified embodiment)

Fig. 1 shows a configuration in which the power sensor 12 and the air flow sensor 14 are provided to each manufacturing apparatus 26. However, the embodiment of the present invention is not limited to this configuration, and can be variously modified.

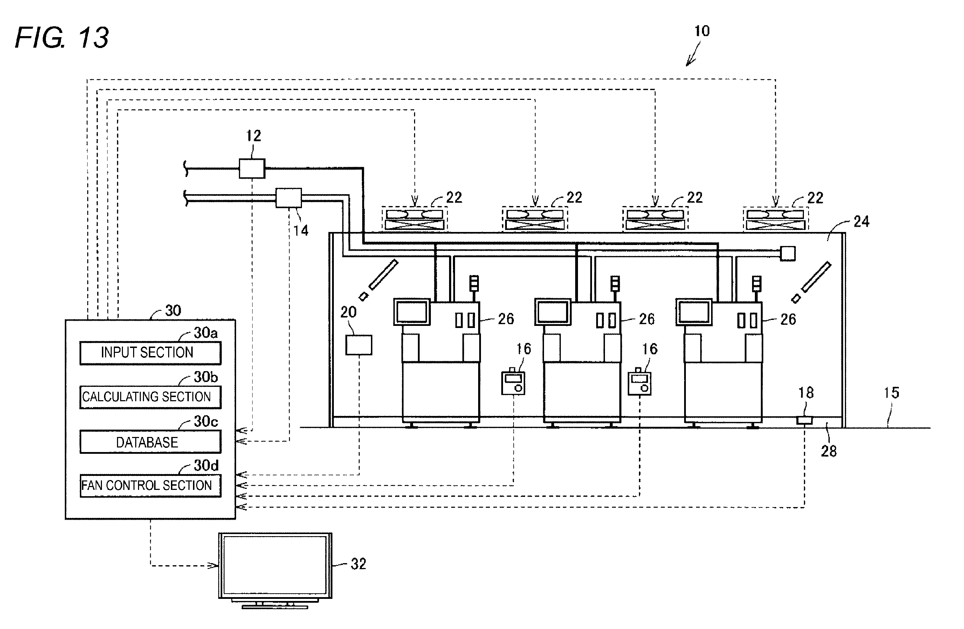

Fig. 13 illustrates a first modified embodiment of the ventilation air flow controlling system according to the embodiment of the present invention. Referring to Fig. 13, one power sensor 12 and one air flow sensor 14 are provided to all of the manufacturing apparatus 26 in the manufacturing room 24. According to this configuration, the control unit 30, for example, identities a total operating state in the manufacturing room 24 based on a frequency distribution of measured value of the power sensor 12 and a frequency distribution of measured value of the air flow sensor 14.

In the configurations as shown in Figs. 1 and 13, an operating state of the apparatus is detected based on a power consumption amount and an air consumption amount of the manufacturing apparatus. However, any of values that can be measured as an energy amount consumed during the operation of the manufacturing apparatus can be used for monitoring an operating state of manufacturing apparatus. Therefore, for example, a consumption amount of gas other than air (nitrogen, etc.) or liquid such as water, etc., may be used for monitoring an operating state of manufacturing apparatus.

Any of devices capable of indicating an operating state of manufacturing apparatus may be used instead of the power sensor 12 and the air flow sensor 14.

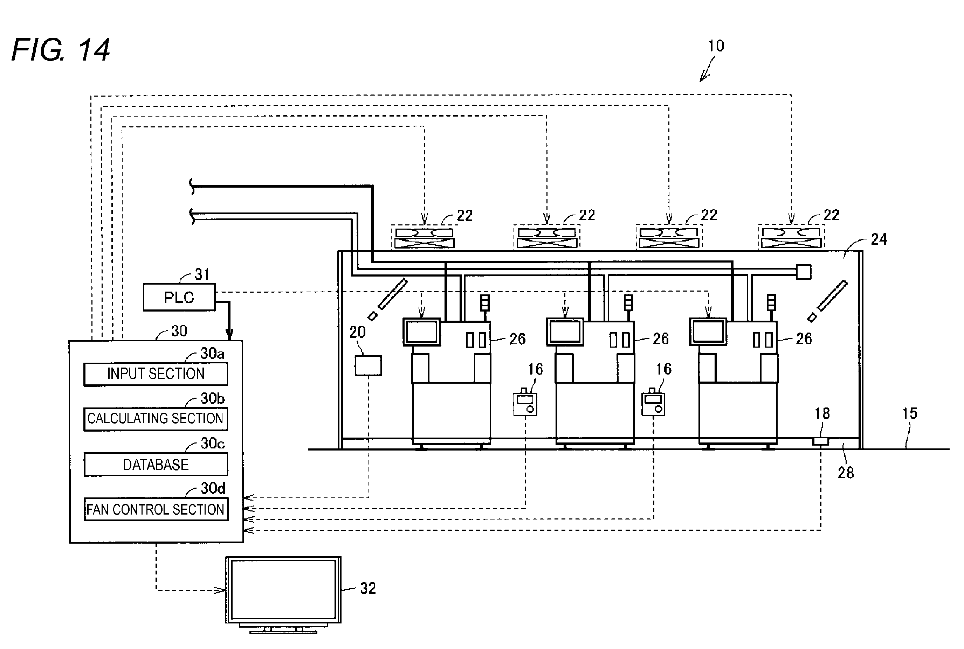

Fig. 14 illustrates a second modified embodiment of the ventilation air flow controlling system according to the embodiment of the present invention. Referring to Fig. 14, a programable logic controller (PLC) 31 controls each of the plurality of manufacturing apparatus 26. Control information (operation, standby and stop, etc.) for each of the control devices is generated in the PLC 31. The control unit 30 obtains the normal information from the PLC 31, and hence, the control unit 30 recognizes an operating state of each manufacturing apparatus 26. The control unit 30 and the PLC 31 may be individually or integrally configured.

In the above-mentioned embodiment, the manufacturing environment (clean booth or clean room) is presented as an example of substantially closed environment. However, the scope of the present invention is not limited to manufacturing environment. For example, the present invention is applicable to substantially closed environment in which energy consumption apparatus is placed, such as a server room or a store in which refrigerating showcases are placed. In the environment, air quality can be indicated by air cleanliness, temperature and humidity, etc., and air flow, temperature and humidity, etc., can be adjusted by using apparatus such as a ventilating device, an air cleaner, an air conditioner, a humidifier and a dehumidifier, etc., for adjusting air quality. Therefore, the present invention may be applied to the above-mentioned environment.

The embodiments described above are illustrative and should not be considered restrictive in any way. The scope of the present invention is given by the appended claims, rather than the preceding description, and all variations and equivalents which fall within range of the claims are intended to be embraced therein.

**Claims**

1. A method for controlling air quality adjustment comprising:

   an associating step of obtaining amounts of energy consumed by an apparatus placed in a substantially closed environment and associating predetermined adjusting amounts of an air adjusting device for adjusting air quality in the substantially closed environment with operating states of the apparatus that are determined based on the obtained energy amounts;

a detecting step of detecting a current operating state of the apparatus; and

a switching step of switching the adjusting amount to the predetermined adjusting amount that is associated with the detected operating state,

wherein the predetermined adjusting amounts are determined based on a relationship between the adjusting amount for achieving a target air quality in the operation state of the apparatus and power consumption of the air adjusting device during the operation of the air adjusting device with the adjusting amount.

2. The method according to claim 1, wherein

the method is a method for controlling ventilation air flow;

the associating step includes obtaining amounts of energy consumed in a manufacturing apparatus placed in a manufacturing environment and associating predetermined air flows of a ventilating device for ventilating the manufacturing environment with operating states of the manufacturing apparatus that are determined based on the obtained energy amounts;

the detecting step includes detecting a current operating state of the manufacturing apparatus;

the switching step includes switching a ventilation air flow of the ventilating device to the predetermined air flow that is associated with the detected operating state, and

the predetermined air flows are determined based on a relationship between the ventilation air flow for achieving target air cleanliness in the operating state of the manufacturing apparatus and power consumption of the ventilating device during the operation of the ventilating device with the ventilation air flow.

3. The method according to claim 2, wherein

the step of associating includes:

calculating a candidate threshold value of the energy amount for classifying operating states of the manufacturing apparatus based on a distribution of the energy amount in a unit interval; and

associating the predetermined air flows with the operating states by using the candidate threshold value.

4. The method according to claim 2 or 3, wherein the energy amount is an energy amount consumed in each of a plurality of manufacturing apparatus.

5. The method according to any of claims 2 to 4, wherein the energy amount is an energy amount consumed in the entire manufacturing environment.

6. The method according to any of claims 2 to 5, wherein the manufacturing apparatus is controlled by a control device, and

wherein the step of detecting a current operating state of the manufacturing apparatus includes identifying the current operating state of the manufacturing apparatus based on a controlling state of the control device.

7. The method according to any of claims 2 to 6, further comprising the steps of:

measuring a particle amount in the manufacturing environment;

indicating a decreasing rate of power consumption relative to maximum power consumption of the ventilating device in response to the step of switching ventilation air flow to the predetermined air flow, the measured particle amount, and time-series data of the particle amount; and

changing the ventilation air flow to air flow corresponding to a user request for the ventilation air flow, if the request occurs.

8. The method according to any of claims 2 to 7, further comprising the steps of:

measuring a particle amount in the manufacturing environment; and

repeatedly associating the predetermined air flow with the operating state of the manufacturing apparatus, when the measured particle amount deviates from a predetermined range.

9. The method according to any of claims 2 to 8, further comprising the steps of:

measuring a particle amount in the manufacturing environment;

detecting a sign of anomalousness in which the measured particle amount continuously rises multiple times within a predetermined range; and
setting the ventilation air flow to maximum air flow, when the sign of anomalousness is detected.

10. The method according to any of claims 2 to 9, further comprising the steps of:

measuring a particle amount in the manufacturing environment;
detecting anomalousness in which the measured particle amount exceeds an upper limit of a predetermined range; and
setting the ventilation air flow to maximum air flow, when the anomalousness is detected.

11. The method according to any of claims 2 to 10, wherein, in the step of associating, the predetermined air flow is determined by gradually decreasing the ventilation air flow from maximum air flow.

12. The method according to any of claims 2 to 11, wherein the manufacturing environment has an opening portion passing from an inside of the manufacturing environment to an outside of the manufacturing environment, and the method further comprising the steps of:

measuring a flow speed in the opening portion; and
changing the ventilation air flow according to the measured flow speed.

13. The method according to any of claims 1 to 12, wherein the predetermined adjusting amount is an optimum adjusting amount.

14. A ventilation air flow controlling system comprising:

a ventilating device configured to ventilate a manufacturing environment in which a manufacturing apparatus is placed;
a detecting device configured to detect a current amount of energy consumption of the manufacturing apparatus; and
a control device configured to change air flow of the ventilating device,
wherein the control device includes:

a calculating unit configured to determine a predetermined air flow of the ventilating device in relation to an amount of energy consumption of the manufacturing apparatus;
a memory unit configured to store a relationship between predetermined air flows of the ventilating device and energy consumption amounts of the manufacturing apparatus; and
a switching unit configured to switch air flow of the ventilating device to the predetermined air flow based on the current amount of energy consumption of the manufacturing apparatus detected by the detecting device and the relationship stored in the memory unit, and
wherein the calculating unit determines the predetermined air flow based on a relationship between the ventilation air flow achieving target air cleanliness while the manufacturing apparatus consumes the amount of energy consumption and power consumption of the ventilating device during the operation of the ventilating device with the ventilation air flow.

FIG. 1

EP 2 527 755 A2

## FIG. 2

**START**

S1 — MONITOR ENERGY CONSUMPTION OF APPARATUS

S2 — CLASSIFY STATE OF APPARATUS (STOP, STANDBY, OPERATION)

S3 — IDENTIFY OPERATING PATTERN

S4 — FFU OPERATING PATTERN HAS BEEN TAUGHT? — NO

YES

B

S5 — SELECT FFU OPERATING PATTERN

S6 — MEASURE PARTICLE STATE AND VENTILATION FREQUENCY (FLOW SPEED)

S7 — WITHIN ±3σ? — NO

YES

S8 — A SIGN OF ANOMALOUSNESS? — NO

A

YES

S9 — $TH_{Lim} \leq P_S$? — NO

YES

S10 — SWITCH FFU OPERATING PATTERN

FIG. 3

FIG. 4

USER INPUT

POWER
(KWH)

FREQUENCY

30

32

EP Status 4

EP Status 3

EP Status 2

EP Status 1

POWER
(KWH)

TIME

*FIG. 5*

FIG. 6

AIR FLOW
(NL/h)

FREQUENCY

USER INPUT

AIR FLOW
(NL/h)

AV Status 4

AV Status 3

AV Status 2

AV Status 1

TIME

EP 2 527 755 A2

EP 2 527 755 A2

*FIG. 7*

| POWER CONSUMPTION IDENTIFICATION | EP Status 3 HIGH | Machine Status 3-1 | Machine Status 3-2 | Machine Status 3-3 |
|---|---|---|---|---|
| | EP Status 2 MEDIUM | Machine Status 2-1 | Machine Status 2-2 | Machine Status 2-3 |
| | EP Status 1 LOW | Machine Status 1-1 | Machine Status 1-2 | Machine Status 1-3 |
| | | AV Status 1 LOW | AV Status 2 MEDIUM | AV Status 3 HIGH |
| | | COMPRESSED AIR CONSUMPTION IDENTIFICATION | | |

*FIG. 8*

## FIG. 9

```
        ┌───┐
        │ A │
        └───┘
          │
          ▼
```

**S11**
SET FFU OPERATING PATTERN
IN TEACHING MODE
(VENTILATION FREQUENCY:
MAXIMUM→MINIMUM)

**S12**
MEASURE PARTICLE STATE AND
VENTILATION FREQUENCY
(FLOW SPEED)

SATURATION RANGE
DATA PER VENTILATION
FREQUENCY
(Ave, $3\sigma$)

**S13**
$TH_{Lim} \leqq P_S$ ?   NO

YES

**S14**
ASSOCIATE OPERATING STATE,
VENTILATION FREQUENCY AND
PARTICLE STATE WITH
EACH OTHER

TARGET PARTICLE
VALUE = (CLASS) × N%

**S15**
COMPARE TARGET QUALITY VALUE
WITH SATURATION RANGE TO SELECT
VENTILATION FREQUENCY

```
        ┌───┐
        │ B │
        └───┘
```

## FIG. 10

| Machine Status | VENTILATION AIR FLOW PATTERN | VENTILATION FREQUENCY (TIMES/H) | ENERGY SAVING RATE | | PARTICLE AMOUNT (p/cf, 0.5 μm) | | |
|---|---|---|---|---|---|---|---|
| | | | POWER CONSUMPTION AMOUNT | ENERGY SAVING RATE | Ave | Ave+3σ | Raw Data File No |
| 1-1 | I | 44 | 8KW | 0% | 24.5 | 35.1 | XXXXXX |
| 1-1 | II | 33 | 7KW | 13% | 33.1 | 55.2 | XXXXXX |
| 1-1 | III | 22 | 6KW | 25% | 34.6 | 78.2 | XXXXXX |
| 1-1 | IV | 19 | 4KW | 50% | 58.9 | 112.1 | XXXXXX |
| 1-1 | V | 14 | 2KW | 75% | 86.4 | 148.5 | XXXXXX |
| 1-1 | VI | 10 | 1KW | 88% | 100.2 | 182.1 | XXXXXX |

EP 2 527 755 A2

## FIG. 11

| Machine Status | VENTILATION AIR FLOW PATTERN | VENTILATION FREQUENCY (TIMES/H) | PARTICLE AMOUNT (p/cf, 0.5 μm) | |
|---|---|---|---|---|
| | | | Ave | Ave+3σ |
| 1-1 | VI | 10 | 24.5 | 35.1 |
| 1-2 | V | 14 | 33.1 | 55.2 |
| 1-3 | IV | 19 | 34.6 | 78.2 |
| 2-1 | V | 14 | 58.9 | 112.1 |
| 2-2 | V | 14 | 86.4 | 148.5 |
| XX | XX | XX | XX.XX | XXX.X |

## FIG. 12

<u>32</u>

| Machine Status | VENTILATION AIR FLOW PATTERN | VENTILATION FREQUENCY (TIMES/H) | ENERGY SAVING RATE | | PARTICLE AMOUNT (p/cf, 0.5 μm) | |
|---|---|---|---|---|---|---|
| | | | POWER CONSUMPTION AMOUNT | ENERGY SAVING RATE | Ave | Ave+3σ |
| ... | ... | ... | ...KW | ...% | ... | ... |

| MANAGEMENT VALUE |
|---|
| ... |

EP 2 527 755 A2

FIG. 13

*FIG. 14*

| | |
|---|---|
| 30 | |
| 30a | INPUT SECTION |
| 30b | CALCULATING SECTION |
| 30c | DATABASE |
| 30d | FAN CONTROL SECTION |

PLC — 31

**REFERENCES CITED IN THE DESCRIPTION**

**Patent documents cited in the description**

- JP 2009174776 A
- JP 2010255898 A

- JP 2005098661 A